# EUROPÄISCHE PATENTSCHRIFT

(11) **EP 3 676 080 B1**
(45) Veröffentlichungstag und Bekanntmachung des Hinweises auf die Patenterteilung: **14.09.2022**
(21) Anmeldenummer: 18765378.7
(22) Anmeldetag: 24.08.2018
(51) Int. Cl.: B29C 65/16, B29C 65/00, B29C 65/20, B60K 15/03, B29L 31/00

(54) **FLÜSSIGKEITSBEHÄLTER UND VERFAHREN ZUM HERSTELLEN EINES FLÜSSIGKEITSBEHÄLTERS**
LIQUID CONTAINER AND METHOD FOR PRODUCING A LIQUID CONTAINER
RÉSERVOIR DE LIQUIDE ET PROCÉDÉ DE FABRICATION D'UN RÉSERVOIR DE LIQUIDE

(30) Priorität: 28.08.2017 DE 102017119707
(43) Veröffentlichungstag der Anmeldung: 08.07.2020
(73) Patentinhaber: Kautex Textron GmbH & Co. KG, 53229 Bonn (DE)
(72) Erfinder: BOUFFIER, Roman, 53639 Königswinter (DE); WOLF, Hartmut, 53639 Königswinter (DE); KOPIEC, Christian, 53842 Troisdorf (DE); GEBERT, Klaus, 47877 Willich (DE); ROSENSTRÄTER, Sebastian Stefan, 50679 Köln (DE); SIGGIA, Fabian, 51143 Köln (DE); HÜTZEN, Markus, 53757 Sankt Augustin (DE)
(74) Vertreter: Richly & Ritschel Patentanwälte PartG mbB
(86) Internationale Anmeldenummer: PCT/EP2018/072928
(87) Internationale Veröffentlichungsnummer: WO 2019/042901

(56) Entgegenhaltungen:
- EP-A1- 0 036 967
- EP-A1- 3 168 075
- DE-A1- 19 814 298
- DE-A1-102013 018 922
- JP-A- H0 516 938
- JP-A- H10 157 738
- JP-A- 2004 098 886
- US-A1- 2003 209 550
- US-A1- 2006 011 173
- US-A1- 2015 102 026

## Beschreibung

Die vorliegende Erfindung betrifft einen Flüssigkeitsbehälter für ein Kraftfahrzeug und ein Verfahren zum Herstellen eines Flüssigkeitsbehälters.

In modernen Kraftfahrzeugen werden eine Vielzahl von Betriebsflüssigkeiten mitgeführt, wie z.B. Kraftstoff, Harnstofflösung zur Abgasnachbehandlung oder Kühlflüssigkeit. Die Flüssigkeiten sind jeweils in einem Flüssigkeitsbehälter aufgenommen. Beispielsweise dienen Kunststoffkraftstoffbehälter zur Bevorratung von Kraftstoff.

Derartige Kunststoffkraftstoffbehälter sollen idealerweise leicht, crashsicher und emissionsarm sein. Bezüglich der Emission müssen die strenger werdenden gesetzlichen Grenzwerte der maximal zulässigen Kraftstoffverdunstungsemissionen von Kohlenwasserstoffen in die Umwelt eingehalten werden. Dies erfordert die Vermeidung von Kraftstoffleckagen unter allen Betriebsbedingungen, wie z.B. bei der Betankung, inklusive der Betankungsentlüftung, bei der Betriebsentlüftung, also der Kraftstoffausgasung bei einem Temperaturanstieg eines Tanksystems, sowie der Diffusion der Kohlenwasserstoffe durch die Behälterwandung.

Um die Diffusion durch die Behälterwandung gering zu halten, weisen bekannte Kraftstoffbehälter eine Diffusionsbarriere auf. Soweit ein solcher Kraftstoffbehälter durch Zusammensetzen zweier spritzgegossener Halbschalen gebildet ist, kann beispielsweise für jede Halbschale eine außenliegende Barriereschicht an einem Trägermaterial angeordnet sein, um etwaige im Spritzguss integrierte, innenliegende Anschluss- oder Formelemente des Trägermaterials in dem Vorratsvolumen des Flüssigkeitsbehälters ohne eine Durchbrechung der Barriereschicht anzuordnen. Hierbei ist nachteilig, dass die außenliegende Barriereschicht mechanischer Beanspruchung ausgesetzt ist, wie z.B. Steinschlag oder dergleichen, und die Barriereschicht lokal zerstört werden kann. Hierdurch kann es zu einer erhöhten diffusionsbedingten Emission eines in dem Kraftstoffbehälter bevorratenden Kraftstoffs in die Umgebung kommen.

In diesem Zusammenhang ist beispielsweise aus dem Dokument JP H10 157738 A ein Verfahren zur Herstellung eines Kraftstofftanks bekannt. Der Kraftstofftank umfasst zwei Halbschalen, die jeweils eine innenliegende Barriereschicht aufweisen.

Dokument JP H05 16938 A beschreibt ein Verfahren zur Herstellung eines Kraftstoffbehälters mit einer geringen Durchlässigkeit für gasförmige Kohlenwasserstoffe. Der Kraftstoffbehälter umfasst zwei Halbschalen, die jeweils einen Aufbau mit einer inneren Schicht, die einer Innenseite des Kraftstoffbehälters zugewandt ist, einer sich daran anschließenden Barriereschicht und einer außenseitigen Schicht aufweisen.

Weiter ist aus dem Dokument US 2003/209550 A1 ein Verfahren zum Herstellen einer Verbindungsbrücke für eine Barriereschicht eines Kraftstofftanks bekannt, um einen Durchtritt von gasförmigem Kraftstoff verhindern. Der Kraftstofftank weist zwei Halbschalen auf, die jeweils einen Aufbau mit einer Barriereschicht, die von einer inneren und einer äußeren Trägerschicht umgeben ist, aufweist.

Das Dokument US 2006/011173 A1 beschreibt ein Verfahren zum Herstellen eines Kraftstofftanks. Es werden zunächst eine obere und eine untere Hälfte eines inneren Tanks durch Spritzgießen hergestellt und in entsprechende Formen zum Spritzgießen oder Überspritzen eingelegt, um den Kraftstofftank zu bilden. Die Hälften des inneren Tanks werden miteinander verschweißt.

Aus dem Dokument EP 0 036 967 A1 ist ein Verfahren zum Herstellen eines Hohlkörpers aus zwei Hälften bekannt. Es werden Formvorlinge bereitgestellt, die eine außenliegende Tragschicht, eine innenseitige Sperrschicht, und eine dazwischenliegende Haftvermittlerschicht umfassen. Es wird eine Schweißverbindung zwischen den beiden Sperrschichten hergestellt.

Das Dokument US 2015/102026 A1 beschreibt ein Verfahren zum Herstellen eines Hohlkörpers aus zwei Hälften. Die zwei Hälften werden mit einer inneren Barriereschicht und einer äußeren Strukturschicht bereitgestellt und miteinander verschweißt.

Vor diesem Hintergrund liegt der Erfindung die technische Problemstellung zugrunde, einen Flüssigkeitsbehälter und ein Verfahren zum Herstellen eines Flüssigkeitsbehälters anzugeben, welche die voranstehend beschriebenen Nachteile nicht oder zumindest in geringerem Maße aufweisen, und insbesondere eine verringerte diffusionsbedingte Emission eines Flüssigkeitsbehälters ermöglichen.

Die voranstehend beschriebene technische Problemstellung wird jeweils gelöst durch einen Flüssigkeitsbehälter nach Anspruch 1 und ein Verfahren nach Anspruch 7. Weitere Ausgestaltungen der Erfindung ergeben sich aus den abhängigen Ansprüchen und der nachstehenden Beschreibung.

Gemäß einem ersten Aspekt betrifft die Erfindung einen Flüssigkeitsbehälter für ein Kraftfahrzeug, mit einer ersten Halbschale und mit einer zweiten Halbschale, wobei die Halbschalen ein Vorratsvolumen zur Aufnahme von Flüssigkeit begrenzen, wobei die erste Halbschale eine erste Trägerschicht und eine erste Barriereschicht hat, wobei die zweite Halbschale eine zweite Trägerschicht und eine zweite Barriereschicht hat, wobei die erste Barriereschicht auf einer innenliegenden, dem Vorratsvolumen zugewandten Seite der ersten Trägerschicht angeordnet ist und wobei die zweite Barriereschicht auf einer innenliegenden, dem Vorratsvolumen zugewandten Seite der zweiten Trägerschicht angeordnet ist. Die Halbschalen sind in einem Verbindungsbereich stoffschlüssig miteinander verbunden, wobei die erste Trägerschicht in dem Verbindungsbereich stoffschlüssig mit der zweiten Trägerschicht verbunden ist, und die erste Barriereschicht und die zweite Barriereschicht sind in dem Verbindungsbereich zueinander beabstandet, wobei kein Kontakt zwischen der ersten Barriereschicht und der zweiten Barriereschicht besteht. Erstarrte Schmelze eines Materials der ersten Trägerschicht und/oder eines Materials der zweiten Trägerschicht ist zwischen den Barriereschichten angeordnet.

Durch die innenliegende Anordnung der Barriereschichten können die Barriereschichten vor mechanischer Beanspruchung, wie zum Beispiel durch Steinschlag oder dergleichen, geschützt werden. Die strukturelle Integrität der Barriereschichten wird demnach im Vergleich zu Flüssigkeitsbehältern mit außenliegender Barriereschicht nicht durch Umgebungseinflüsse beeinträchtigt. Auf diese Weise kann die Barrierewirkung der Barriereschichten, die einer diffusionsbedingten Emission von beispielsweise in dem Flüssigkeitsbehälter bevorratetem Kraftstoff entgegenwirkt, dauerhaft gewährleistet werden.

Bei dem Flüssigkeitsbehälter kann es sich insbesondere um einen Kunststoffkraftstoffbehälter für ein Kraftfahrzeug handeln, der zur Bevorratung von Kraftstoff zum Antrieb eines Verbrennungsmotors eingerichtet ist. Die Barriereschichten und/oder die Trägerschichten sind insbesondere dazu geeignet mit einem Diesel- oder Benzinkraftstoff in Kontakt zu sein. Der Werkstoff der Barriereschicht und der Werkstoff der Trägerschicht müssen daher hinsichtlich ihrer Quelleigenschaften dazu geeignet sein, in unmittelbarem Kontakt mit einem flüssigen Kraftstoff zu stehen. Sowohl der Trägerwerkstoff als auch die Barriereschicht müssen hinsichtlich ihrer chemischen Beständigkeit und Quellungseigenschaften für den Einsatz in direktem Kraftstoffkontakt geeignet sein.

Die einlagige oder mehrlagige Trägerschicht kann einen oder mehrere der folgenden Werkstoffe aufweisen oder aus einem oder mehreren der folgenden Werkstoffe bestehen: Elastomer, thermoplastisches Elastomer, HDPE (High-density polyethylene), faserverstärktes Polyamid, PA (Polyamid), teilaromatisches Polyamid, schlagzähes Polyamid.

Die einlagige oder mehrlagige Barriereschicht kann einen oder mehrere der folgenden Werkstoffe aufweisen oder aus einem oder mehreren der folgenden Werkstoffe bestehen: EVOH (Ethylen-Vinylalkohol-Copolymer), LDPE (Low-density polyethylene), PEEK (Polyetheretherketon), PA (Polyamid), teilaromatisches Polyamid, HDPE (High-density polyethylene), Fluorpolymer. Z.B. kann die Barriereschicht dreilagig aus PA und EVOH aufgebaut sein, wobei eine zentrale EVOH Lage zweiseitig von PA-Deckschichten bedeckt bzw. eingefasst ist. Es können auch ein beispielsweise sechslagiger Wandungsaufbau oder ein fünflagiger Aufbau aus HDPE, LDPE und EVOH vorgesehen sein, wobei eine zentrale Schicht aus EVOH zweiseitig von jeweils einer LDPE Schicht bedeckt ist, und wobei die LDPE-Schichten ihrerseits wiederum von HDPE-Schichten bedeckt sind.

Bei der ersten Halbschale kann es sich um eine Oberschale eines Kunststoffkraftstoffbehälters für ein Kraftfahrzeug handeln. Bei der zweiten Halbschale kann es sich um eine Unterschale des Kunststoffkraftstoffbehälters handeln.

Die Oberschale ist im Einbauzustand dem Fahrzeug zugewandt. Die Unterschale ist im fertig montierten Zustand dem Fahrzeug abgewandt bzw. der Straße oder Fahrbahn zugewandt.

Es kann vorgesehen sein, dass die erste Barriereschicht die dem Vorratsvolumen zugewandte Seite der ersten Trägerschicht im Wesentlichen vollständig bedeckt. Alternativ oder ergänzend kann vorgesehen sein, dass die zweite Barriereschicht die dem Vorratsvolumen zugewandte Seite der zweiten Trägerschicht im Wesentlichen vollständig bedeckt. Auf diese Weise kann eine zuverlässige Kapselung einer in dem Flüssigkeitsbehälter bevorrateten Flüssigkeit erreicht werden.

Nach einer nicht beanspruchten alternativen Ausgestaltung des Flüssigkeitsbehälters ist vorgesehen, dass die Halbschalen in einem Verbindungsbereich stoffschlüssig miteinander verbunden sind, wobei die erste Barriereschicht in dem Verbindungsbereich stoffschlüssig mit der zweiten Barriereschicht verbunden ist, und dass die erste Trägerschicht und die zweite Trägerschicht in dem Verbindungsbereich zueinander beabstandet sind, wobei kein Kontakt zwischen der ersten Trägerschicht und der zweiten Trägerschicht besteht und wobei die Trägerschichten die Barriereschichten zweiseitig einfassen.

Durch die stoffschlüssige Verbindung der Barriereschichten kann eine im Wesentlichen geschlossene Barriereblase gebildet werden, die das Vorratsvolumen des Flüssigkeitsbehälters im Wesentlichen vollständig einfasst, mit der Einschränkung, dass die für einen Tank obligatorischen Anschlüsse wie Einfüllstutzen, Entlüftung und/oder Entnahmeöffnung vorgesehen sind. Auf diese Weise kann eine diffusionsbedingte Emission zuverlässig begrenzt werden. Wenn vorliegend davon gesprochen wird, dass die Barriereschichten das Vorratsvolumen im Wesentlichen vollständig einfassen, so betrifft dies daher insbesondere die Vermeidung eines Permeationspfads im Verbindungbereich zwischen den Halbschalen und es versteht sich, dass zum Befüllen des Flüssigkeitsbehälters, z.B. mit Kraftstoff, und zur Entnahme des Kraftstoffs aus dem Flüssigkeitsbehälters Zuleitungen und Abgänge und/oder Entlüftungsventile vorgesehen sind, im Bereich derer die erste oder zweite Barriereschicht lokal durchbrochen ist. Es können demnach die Wandung einer Halbschale durchdringende Anschlussöffnungen vorgesehen sein. Die Anschlussöffnungen können im Spritzgussverfahren hergestellt worden sein.

Nach einer weiteren nicht beanspruchten alternativen Ausgestaltung des Flüssigkeitsbehälters ist vorgesehen, dass wenigstens eine der Halbschalen in dem Verbindungsbereich zumindest teilweise aus einem lasertransparenten Material gebildet ist, wobei die stoffschlüssige Verbindung mittels Laserdurchstrahlschweißen gebildet worden ist.

Es kann dabei vorgesehen sein, dass die erste Trägerschicht in dem Verbindungsbereich zumindest teilweise aus einem lasertransparenten Material gebildet ist. In diesem Fall kann ein von einer Laserschweißeinrichtung erzeugter Laserstrahl die erste Trägerschicht durchdringen und beispielsweise von der ersten Barriereschicht absorbiert werden, wodurch es zu einem lokalen Aufschmelzen der ersten Barriereschicht und der zweiten Barriereschicht und zu einem stoffschlüssigen Verbinden derselben kommt.

In einem nicht beanspruchten Alternativ kann dabei vorgesehen sein, dass sowohl die erste Trägerschicht als auch die erste Barriereschicht in dem Verbindungsbereich zumindest teilweise aus einem lasertransparenten Material gebildet sind. In diesem Fall kann ein von einer Laserschweißeinrichtung erzeugter Laserstrahl die erste Trägerschicht und die erste Barriereschicht durchdringen und kann von der zweiten Barriereschicht absorbiert werden, die infolgedessen aufgeschmolzen wird und wobei eine stoffschlüssige Verbindung zwischen der zweiten Barriereschicht und der ersten Barriereschicht gebildet werden kann.

Mit anderen Worten kann dabei vorgesehen sein, dass die erste Barriereschicht aus einem lasertransparenten oder einem laserundurchlässigen Material gebildet sein kann, während die erste Trägerschicht aus lasertransparentem Material gebildet ist. Es kann dabei weiter vorgesehen sein, dass die zweite Trägerschicht aus einem lasertransparenten Material gebildet ist, wobei die zweite Barriereschicht aus einem lasertransparenten Material oder einem nicht lasertransparenten Material gebildet sein kann. Es kann vorgesehen sein, dass sowohl die erste Trägerschicht als auch die zweite Trägerschicht aus einem lasertransparenten Material gebildet sind.

Es kann dabei weiter vorgesehen sein, dass beide Trägerschichten und eine Barriereschicht aus lasertransparentem Material gebildet sind. Für die Funktionsweise des Prozesses ist es lediglich erforderlich, dass wenigstens eine der Barriereschichten in dem Verbindungsbereich aus einem nicht lasertransparenten, also einem laserabsorbierenden Material, gebildet ist, sodass wenigstens eine der Barriereschichten zur Aufschmelzung infolge des Energieeintrags durch den Laser geeignet ist.

Beispielsweise können die erste und die zweite Trägerschicht durch Heizspiegelschweißen miteinander verbunden worden sein, um eine kostengünstige und haltbare stoffschlüssige Verbindung zu erzielen.

Gemäss der Erfindung kann es vorgesehen sein, dass die Barriereschichten in dem Verbindungsbereich vollständig von den Trägerschichten umschlossen und durch die Trägerschichten gegenüber einer Umgebung abgegrenzt sind. Auf diese Weise können die Barriereschichten vor Umgebungseinflüssen geschützt werden.

Es kann vorgesehen sein, dass in dem Verbindungsbereich zwischen den zueinander beabstandeten Barriereschichten ein Permeationspfad gebildet ist, und dass in einem Querschnitt betrachtet eine Länge des Permeationspfads größer oder gleich einem Zweifachen der Breite des Permeationspfads ist, wobei die Breite des Permeationspfads dem Abstand der Barriereschichten in dem Verbindungsbereich entspricht. Durch das angegebene Längen- und Breiten-Verhältnis kann beispielsweise die diffusionsbedingte Emission eines Kraftstoffs entlang des Permeationspfads auf einem zulässigen Niveau gehalten werden. Bei dem Material der Trägerschichten kann es sich z.B. um ein HDPE handeln.

Es kann vorgesehen sein, dass in einem Querschnitt betrachtet eine Länge des Permeationspfads größer ist, als eine Wanddicke der ersten Halbschale und der zweiten Halbschale.

Gemäß einer weiteren Ausgestaltung des Flüssigkeitsbehälters ist vorgesehen, dass wenigstens eine der Halbschalen in dem Verbindungsbereich einen Steg hat, wobei die stoffschlüssige Verbindung entlang des Stegs gebildet ist. Der Steg kann insbesondere formschlüssig in einer zumindest abschnittsweise komplementär geformten Aufnahme der jeweils anderen Halbschale sitzen.

Bei dem Steg kann es sich um einen umfangsseitig umlaufenden Steg handeln. Der Steg kann dazu dienen, eine definierte Anlage zwischen den Halbschalen zu erreichen.

Beide Halbschalen können einen umlaufenden Steg haben, der jeweils zur Ausbildung einer definierten Anlage zwischen den Halbschalen dient, beispielsweise für einen Schweißprozess.

Bei dem Steg bzw. den Stegen kann es sich um seitlich auskragende Schweißkragen handeln.

Es kann vorgesehen sein, dass wenigstens eine der Barriereschichten eine einlagige Folie ist, die in einem Spritzgussverfahren stoffschlüssig mit der zugeordneten Trägerschicht verbunden worden ist. Hierzu kann die Folie in einer Werkzeughälfte eines Spritzgusswerkzeugs aufgenommen sein und mit plastifiziertem Trägerwerkstoff angespritzt bzw. hinterspritzt werden. Durch den Spritzgussvorgang wird eine stoffschlüssige Verbindung zwischen der Barrierefolie und der Trägerschicht gebildet. So kann eine Halbschale mit Trägerschicht und Barrierefolie kostengünstig und unter geringem Materialeinsatz hergestellt werden.

Alternativ oder ergänzend kann vorgesehen sein, dass wenigstens eine der Barriereschichten eine mehrlagige Folie ist, die in einem Spritzgussverfahren stoffschlüssig mit der zugeordneten Trägerschicht verbunden worden ist. Bei einer solchen mehrlagigen Folie kann es sich beispielsweise um eine fünfschichtige Folie handeln, die eine zentrale Schicht aus EVOH (Ethylen-Vinylalkohol-Copolymer) enthält, die EVOH-Schicht zweiseitig von einer LDPE (Low-density polyethylene) Schicht bedeckt ist, und wobei die LDPE-Schichten ihrerseits wiederum von HDPE-Schichten (High-density polyethylene) bedeckt sind.

In einem nicht beanspruchten Beispiel, können die Deckschichten einer mehrlagigen Folie insbesondere artgleich zu dem Trägerwerkstoff ausgebildet sein, um eine zuverlässige stoffschlüssige Verbindung zwischen dem Trägerwerkstoff und der Barrierefolie zu erreichen. So kann die Barrierewirkung einer mehrschichtigen Folie beispielsweise maßgeblich durch eine EVOH-Schicht bereitgestellt werden, während die LDPE-Schichten jeweils als Haftvermittler zu den außenliegenden HDPE-Schichten dienen und eine der HDPE-Schichten ihrerseits wiederum zur zuverlässigen Anhaftung bzw. stoffschlüssigen Verbindung mit einem Trägermaterial vorgesehen sein kann, wobei das Trägermaterial ebenfalls aus dem HDPE der Deckschichten der Barrierefolie bestehen kann.

Nach einer weiteren Ausgestaltung des Flüssigkeitsbehälters ist vorgesehen, dass auf einer dem Vorratsvolumen zugewandten Seite wenigstens einer der Barriereschichten lokal ein Kunststoff angespritzt ist, der zur Anbindung von Formelementen, Anschlussteilen oder Funktionseinheiten dient. Hierbei kann beispielsweise nach dem Herstellen der Trägerschicht im Spritzguss auf einer der Trägerschicht abgewandten Seite der Barriereschicht lokal ein Trägerwerkstoff durch sequenzielles Spritzgießen an die Barriereschicht angespritzt werden. Der lokal angespritzte Kunststoff kann beispielsweise ein Sockel oder plattenartiges Element aus Trägermaterial sein, an dem beispielsweise ein Schwalltopf angeschweißt oder angeklebt werden kann. Auf diese Weise kann eine Funktionseinheit im Bereich einer Halbschale mit innenliegender Barriereschicht angeordnet werden, ohne die Barriereschicht zu durchbrechen oder zu unterbrechen. Somit kann die Barrierewirkung der jeweiligen Barriereschicht aufrechterhalten werden, wobei zudem Formelemente, Anschlussteile oder Funktionseinheiten im Bereich des lokal angespritzten Kunststoffs der Halbschale angeordnet werden können.

Die Wanddicke einer der Trägerschichten für sich genommen kann 2 mm bis 6 mm betragen, insbesondere 2 mm bis 4 mm betragen. Diese geringe Wanddicke kann über beispielsweise 90 % der gesamten Oberfläche einer Halbschale ausgebildet sein, wobei lokale Verstärkungsrippen, Abgänge oder andere lokale Verdickungen vorgesehen sein können.

Die Dicke einer der Barriereschichten, insbesondere Barrierefolien, kann 100 µm bis 1000 µm betragen.

Gemäß einem zweiten Aspekt betrifft die Erfindung ein Verfahren gemäss Anspruch 7.

Mithilfe des erfindungsgemäßen Verfahrens kann ein Flüssigkeitsbehälter hergestellt werden, bei dem die strukturelle Integrität der Barriereschichten durch ihre innenliegende Anordnung vor mechanischer Beanspruchung geschützt ist.

Alternativ kann vorgesehen sein, dass
- das Verbinden der Halbschalen durch Heizspiegelschweißen erfolgt, mit den Verfahrensschritten:
- Erhitzen und Plastifizieren wenigstens eines an einem Steg einer Trägerschicht gebildeten Vorsprungs mit einem Heizspiegel
- Aneinanderdrücken der Halbschalen wobei plastifiziertes Material des Vorsprungs zwischen die Barriereschichten gedrückt wird.

Durch das Heizspiegelschweißen kann eine zuverlässige und kostengünstige Verbindung zwischen Trägerschichten erreicht werden.

Weiter kann während des Aneinanderdrückens der Halbschalen ein Dichtelement an eine Stirnseite des Stegs angelegt wird. Durch das Dichtelement kann verhindert werden, dass Schmelze seitlich zwischen den Halbschalen aus dem Verbindungsbereich gedrückt wird. Das Dichtelement sorgt dafür, dass plastifiziertes Material des Vorsprungs gezielt zwischen die Barriereschichten gelangt.

Es kann vorgesehen sein, dass jede der Halbschalen einen umlaufenden Steg mit wenigstens einem Vorsprung aufweist, wobei einander zugewandte Vorsprünge beide Halbschalen vor dem Aneinanderdrücken der Halbschalen mithilfe des Heizspiegels plastifiziert werden. Die Vorsprünge können in einem Querschnitt und entlang einer Fügerichtung betrachtet einen Versatz zueinander aufweisen oder im Querschnitt und entlang einer Fügerichtung betrachtet in einer Flucht liegen. Durch die Dimensionierung der Vorsprünge kann die Wandstärke des zwischen den Barriereschichten angeordneten Materials der Trägerschichten und damit der Abstand der Barriereschichten zueinander eingestellt werden.

Die Vorsprünge können, wie auch die Stege, umlaufend sein.

Nachfolgend wird die Erfindung anhand einer Ausführungsbeispiele darstellenden Zeichnung näher beschrieben es zeigen jeweils schematisch:
- Fig. 1: einen Flüssigkeitsbehälter in einem Querschnitt; Dieser Flüssigkeitbehälter ist nicht beansprucht und dient nur zu Illustrationszwecken.
- Fig. 2: die Herstellung des Flüssigkeitsbehälters aus Fig. 1;
- Fig. 3: einen erfindungsgemäßen Flüssigkeitsbehälter in einem Querschnitt;
- Fig. 4: die Herstellung des Flüssigkeitsbehälters aus Fig. 3;
- Fig. 5: einen weiteren Flüssigkeitsbehälter in einem Querschnitt und dessen Herstellung; Dieser Flüssigkeitbehälter ist nicht beansprucht und dient nur zu Illustrationszwecken.
- Fig. 6: einen weiteren erfindungsgemäßen Flüssigkeitsbehälter in einem Querschnitt und dessen Herstellung.

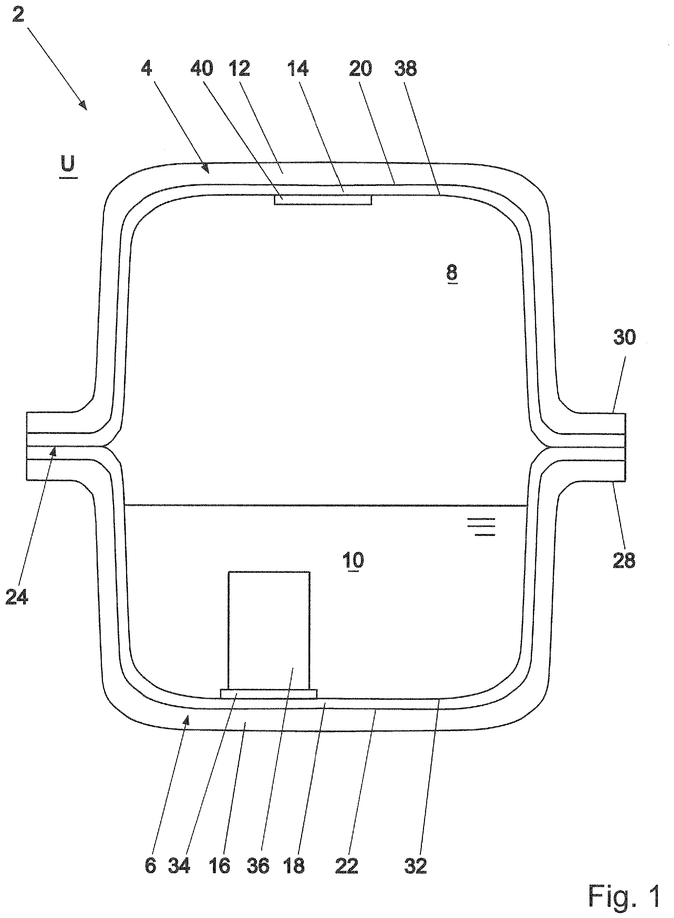

Fig. 1 zeigt einen Flüssigkeitsbehälter 2 für ein Kraftfahrzeug in einem Querschnitt. Der Flüssigkeitsbehälter 2 hat eine erste Halbschale 4 und eine zweite Halbschale 6. Die Halbschalen 4, 6 begrenzen ein Vorratsvolumen 8 zur Aufnahme von Flüssigkeit 10.

Bei dem Flüssigkeitsbehälter 2 handelt es sich vorliegend um einen Kunststoffkraftstoffbehälter 2 für ein Kraftfahrzeug. Bei der Flüssigkeit 10 handelt es sich vorliegend um Kraftstoff 10 zum Antrieb eines Verbrennungsmotors.

Die erste Halbschale 4 hat eine erste Trägerschicht 12 und eine erste Barriereschicht 14. Die zweite Halbschale 6 hat eine zweite Trägerschicht 16 und eine zweite Barriereschicht 18. Die erste Barriereschicht 14 ist auf einer dem Vorratsvolumen 8 zugewandten Seite 20 der ersten Trägerschicht 12 angeordnet. Die zweite Barriereschicht 18 ist auf einer dem Vorratsvolumen 8 zugewandten Seite 22 der zweiten Trägerschicht 16 angeordnet.

Die erste Barriereschicht 14 bedeckt die dem Vorratsvolumen 8 zugewandte Seite 20 der ersten Trägerschicht 12 im Wesentlichen vollständig. Die zweite Barriereschicht 18 bedeckt die dem Vorratsvolumen 8 zugewandte Seite 22 der zweiten Trägerschicht 16 im Wesentlichen vollständig.

Die Halbschalen 4, 6 sind in einem Verbindungsbereich 24 stoffschlüssig miteinander verbunden. Die erste Barriereschicht 14 ist in dem Verbindungsbereich 24 stoffschlüssig mit der zweiten Barriereschicht 18 verbunden.

Die erste Trägerschicht 12 und die zweite Trägerschicht 16 sind in dem Verbindungsbereich 24 zueinander beabstandet, wobei kein Kontakt zwischen der ersten Trägerschicht 12 und der zweiten Trägerschicht 16 besteht und wobei die Trägerschichten 12, 16 die Barriereschichten 14, 18 zweiseitig einfassen. Es versteht sich, dass der Verbindungsbereich 24 eine vollständig umlaufende, in sich geschlossene stoffschlüssige Verbindung darstellt, sodass die Halbschalen 4, 6 eine im Wesentlichen geschlossene Tankblase bilden.

Wie voranstehend bereits erwähnt, weist die im Wesentlichen geschlossene Tankblase nicht dargestellte, obligatorische Zu- und Abgänge zum Befüllen, zur Entnahme und Belüftung auf, im Bereich derer eine Barriereschicht lokal unterbrochen ist.

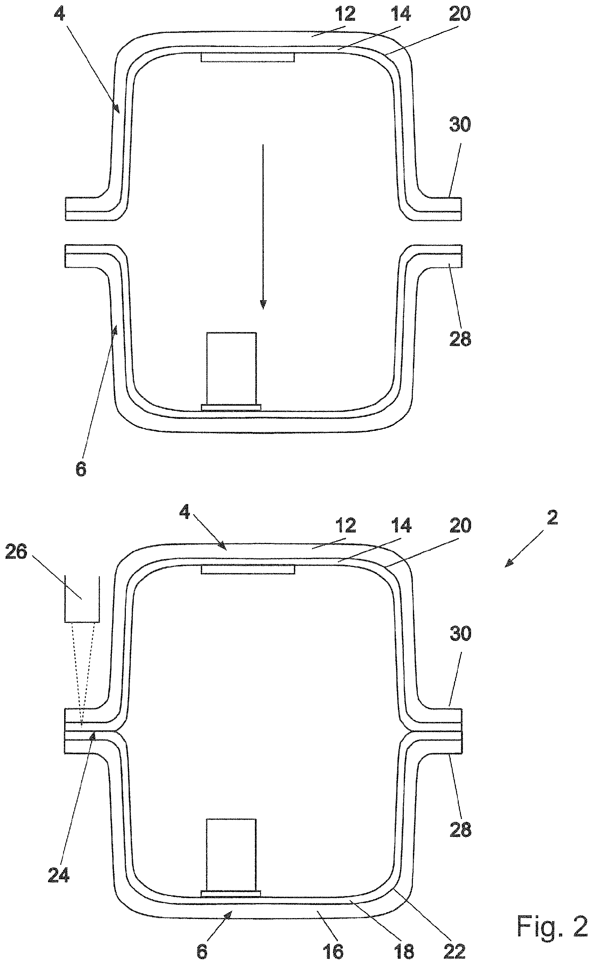

Wie Fig. 2 zu entnehmen ist, ist die erste Halbschale 4 in dem Verbindungsbereich 24 zumindest teilweise aus einem lasertransparenten Material gebildet, wobei die stoffschlüssige Verbindung zwischen den Halbschalen 4, 6 mittels Laserdurchstrahlschweißen mithilfe einer Laserschweißeinrichtung 26 hergestellt worden ist.

In dem vorliegenden Beispiel ist die erste Trägerschicht 12 in dem Verbindungsbereich 24 zumindest teilweise aus lasertransparentem Material gebildet. Gemäß weiteren Beispielen kann vorgesehen sein, dass die erste Trägerschicht vollständig aus lasertransparentem Material hergestellt ist. Gemäß weiteren Ausgestaltungen kann ebenfalls vorgesehen sein, dass die erste Trägerschicht und die erste Barriereschicht in dem Verbindungsbereich zumindest teilweise aus lasertransparentem Material gebildet sind.

Die Halbschalen 4, 6 haben in dem Verbindungsbereich 24 jeweils einen Steg 28, 30. Die stoffschlüssige Verbindung zwischen den Barriereschichten 14, 18 ist entlang der Stege 28,30 gebildet. Bei den Stegen 28, 30 handelt es sich um umfangsseitig umlaufende Stege 28, 30, die jeweils seitlich auskragend erstreckt sind, um eine definierte Anlage zwischen den Halbschalen 4, 6 zur Ausbildung einer Schweißverbindung bereitstellen. Die Stege 28, 30 können jeweils als Schweißkragen 28, 30 bezeichnet werden.

Bei den Barriereschichten 14, 18 handelt es sich vorliegend um einlagige Folien, die im Spritzgussverfahren stoffschlüssig mit den jeweils zugeordneten Trägerschicht 12, 16 stoffschlüssig verbunden worden sind. Gemäß weiterer Beispiele kann vorgesehen sein, dass wenigstens eine Barrierefolie, insbesondere beide Barrierefolien mehrlagig ausgebildet sind, und beispielsweise einen fünfschichtigen Wandungsaufbau, mit einer zentralen EVOH Schicht, zwei die EVOH-Schicht bedeckende LDPE-Schichten, und zwei die LDPE schichten bedeckende HDPE-Schichten aufweisen können.

Auf einer dem Vorratsvolumen 8 zugewandten Seite 32 der Barriereschicht 18 ist lokal ein Kunststoff 34 angespritzt worden, der zur Anbindung eines Schwalltopfs 36 verwendet worden ist. Der Kunststoff 34 bildet einen Sockel 34, an den der Schwalltopf 36 angeschweißt worden ist. Der Schwalltopf 36 ist damit in das Vorratsvolumen 8 integriert worden, ohne die strukturelle Integrität der Barriereschicht 18 zu beeinträchtigen.

Gleichermaßen ist auf einer dem Vorratsvolumen 8 zugewandten Seite 38 der Barriereschicht 14 ein Kunststoff 40 angespritzt worden, der zur Anbindung von Formelementen, Anschlussteilen oder Funktionseinheiten dient.

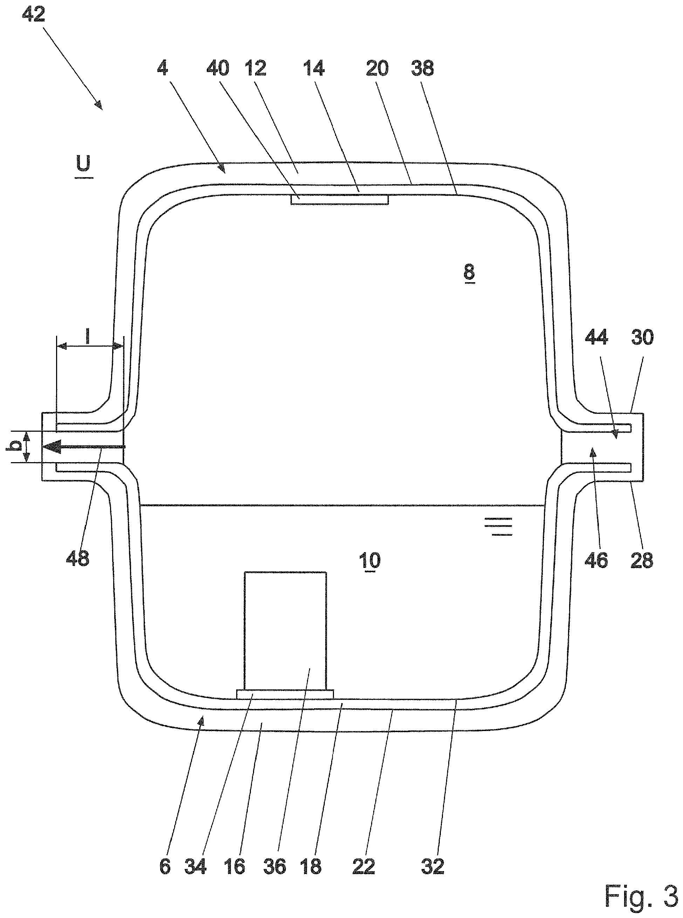

Fig. 3 zeigt eine Ausgestaltung eines erfindungsgemäßen Flüssigkeitsbehälters 42 in einem Querschnitt. Zur Vermeidung von Wiederholungen werden im Vergleich zu den voranstehend beschriebenen Ausführungsbeispielen gleichen Merkmalen gleich Bezugszeichen zugeordnet.

Der Flüssigkeitsbehälter 42 unterscheidet sich dadurch von dem Flüssigkeitsbehälter 2, dass die Halbschalen 4, 6 in einem Verbindungsbereich 44 stoffschlüssig miteinander verbunden sind, wobei die erste Trägerschicht 12 in dem Verbindungsbereich 44 stoffschlüssig mit der zweiten Trägerschicht 16 verbunden ist.

Die erste Barriereschicht 14 und die zweite Barriereschicht 18 sind in dem Verbindungsbereich zueinander beabstandet, wobei kein Kontakt zwischen der ersten Barriereschicht 14 und der zweiten Barriereschicht 18 besteht. Erstarrte Schmelze 46 eines Materials der ersten Trägerschicht 12 und der zweiten Trägerschicht 16 sind zwischen den Barriereschichten 14, 18 angeordnet. Es versteht sich, dass es in dem Verbindungsbereich 44 zu einer lokalen Durchmischung des Materials der ersten Trägerschicht 14 und der zweiten Trägerschicht 16 kommt.

Die Barriereschichten 14, 18 sind in dem Verbindungsbereich 44 vollständig von den Trägerschichten 12, 16 umschlossen und durch die Trägerschichten 12, 16 gegenüber einer Umgebung U abgegrenzt. Eine breite b eines Permeationspfads 48 entspricht dem Abstand der Barriereschichten 14, 18. In dem vorliegenden Querschnitt betrachtet beträgt eine Länge l des Permeationspfads 48 mehr als das Zweifache der Breite b des Permeationspfads 48.

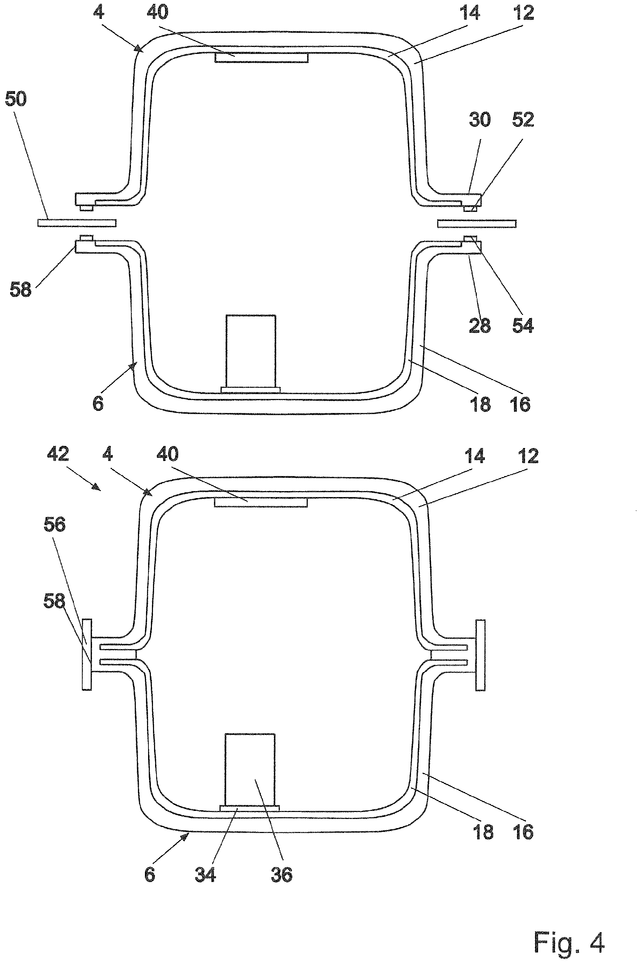

Wie Fig. 4 zu entnehmen ist, ist der Flüssigkeitsbehälter 42 mittels Heizspiegelschweißen hergestellt worden. Hierzu sind die im Spritzguss bereitgestellten Halbschalen 4 und 6 in dem Verbindungsbereich 44 zunächst mittels eines Heizspiegels 50 erwärmt worden.

Dazu sind insbesondere an den Stegen 28, 30 gebildete Vorsprünge 52, 54 plastifiziert worden. In einem nächsten Schritt sind die Halbschalen 4,6 aneinandergedrückt worden, wobei plastifiziertes Material der Vorsprünge 52, 54 zwischen die Barriereschichten 14, 18 gedrückt wird. Während des Aneinanderdrückens der Halbschalen 4,6 wird ein Dichtelement 56 an eine Stirnseite 58 der Stege 28,30 angelegt.

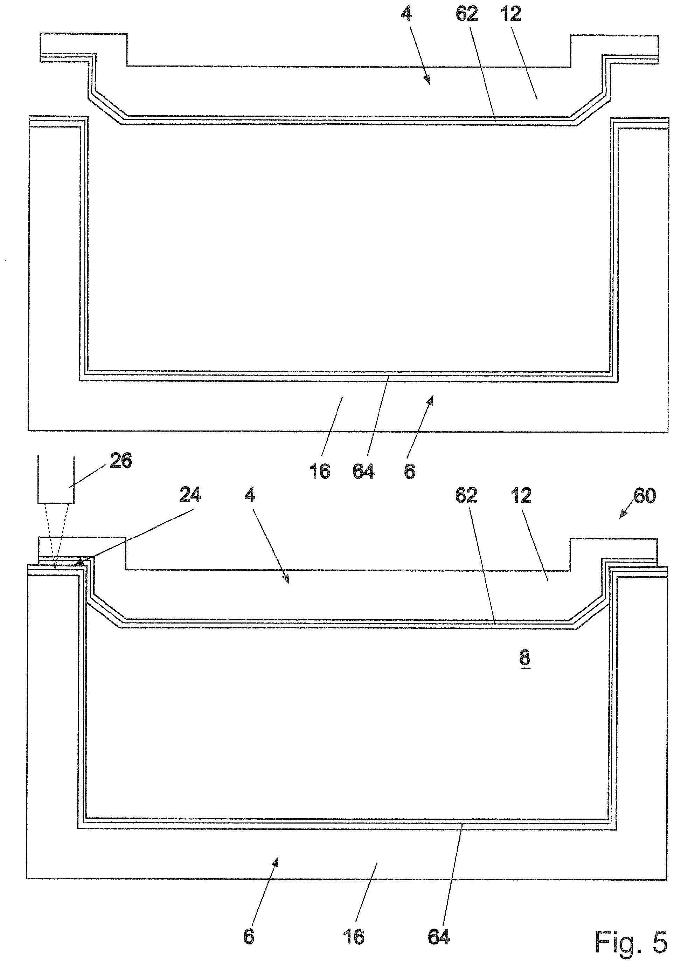

Fig. 5 zeigt eine weitere Variante eines Flüssigkeitsbehälters 60. Diese Variante ist nicht beansprucht und dient nur zu Illustrationszwecken.

Der Flüssigkeitsbehälter 60 unterscheidet sich von den vorangehen beschriebenen Beispielen durch den asymmetrischen Aufbau von der ersten Halbschale 4 im Vergleich zur zweiten Halbschale 6. Die erste Halbschale 4 bildet vorliegend einen Deckel der zweiten Halbschale 6.

Weiter sind eine erste Barriereschicht 62 und eine zweite Barriereschicht 64 vorgesehen, die einen fünflagigen Aufbau haben. Die erste Barriereschicht 62 weist eine zentrale Schicht aus EVOH auf, die zweiseitig von Haftvermittlerschichten aus LDPE bedeckt ist. Die LDPE-Schichten sind ihrerseits wiederum zweiseitig von HDPE-Schichten eingefasst.

Die in dieser Art gebildete fünflagige Barrierefolie 62 ist im Spritzgussverfahren stoffschlüssig mit der ersten Trägerschicht 12 verbunden worden. Die erste Trägerschicht 12 ist ebenfalls aus einem HDPE gebildet, wobei die stoffschlüssige Verbindung zwischen der ersten Trägerschicht 12 und der ersten Barriereschicht 62 artgleich ist.

Wie im oberen Teil der Fig. 5 dargestellt, werden die erste Halbschale 4 und die zweite Halbschale 6 zunächst separat voneinander bereitgestellt. In einem zweiten Schritt werden die erste Halbschale 4 und die zweite Halbschale 6 aneinander angedrückt und mittels Laserschweißvorrichtung 26 stoffschlüssig miteinander verbunden, wie voranstehend bereits mit Bezug zu Fig. 2 diskutiert worden ist.

Wie auch im Beispiel der Fig. 2 weisen die erste Trägerschicht 12 und die zweite Trägerschicht 16 des Flüssigkeitsbehälters 60 in dem Verbindungsbereich 24 einen Abstand zueinander auf. Es besteht daher kein unmittelbarer Kontakt zwischen der ersten Trägerschicht 12 und der zweiten Trägerschicht 16.

Die erste Barriereschicht 14 und die zweite Barriereschicht 18 bilden eine im Wesentlichen geschlossene Barriereblase um das Vorratsvolumen 8, mit den bereits voranstehend diskutierten Einschränkungen für etwaige Zu- und Abgänge für Fluidströme.

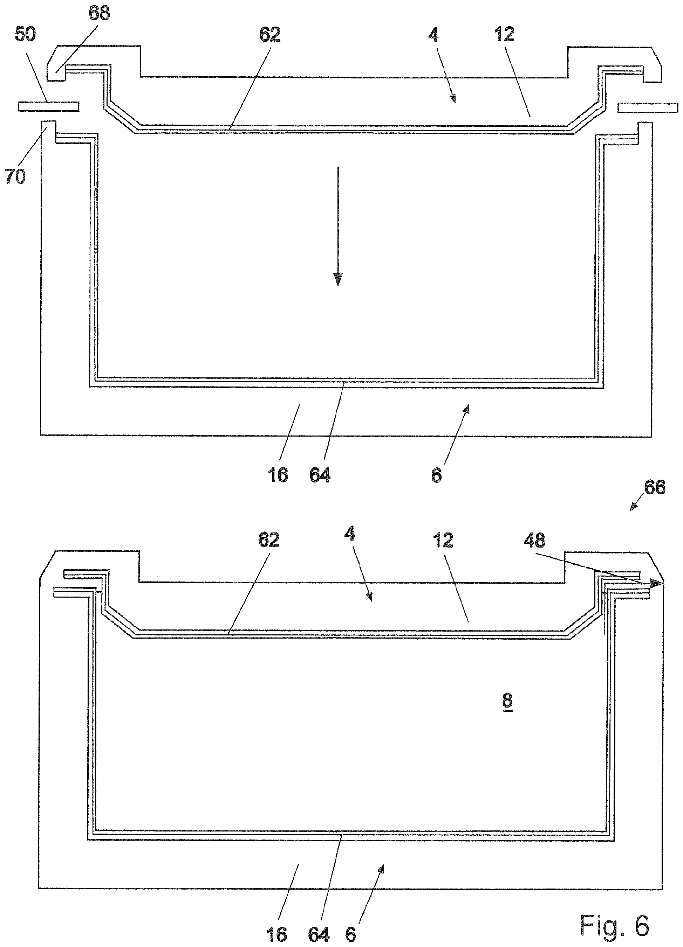

Fig. 6 zeigt eine weitere Variante eines erfindungsgemäßen Flüssigkeitsbehälters 66. In diesem Ausführungsbeispiel sind die erste Halbschale 4 und die zweite Halbschale 6 asymmetrisch aufgebaut, wobei die erste Halbschale einen Deckel der zweite Halbschale 6 bildet.

Die erste Halbschale 4 und die zweite Halbschale 6 sind analog zum im Fig. 4 diskutierten Ausführungsbeispiel durch Heizspiegelschweißen mithilfe eines Heizspiegels 50 miteinander verschweißt worden.

Hierzu sind lokale Vorsprünge 68, 70 der Halbschalen 4,6 mithilfe des Heizspiegels plastifiziert worden. Anschließend ist der Heizspiegel 50 entfernt worden und die Halbschalen 4, 6 sind aneinandergedrückt worden, wobei plastifizierter Werkstoff der Vorsprünge 68, 70 zwischen mehrlagige Barriereschichten 62, 64 gedrückt worden ist. Die Barriereschichten 62, 64 weisen demnach einen Abstand zueinander auf, wobei kein unmittelbarer Kontakt zwischen den Barriereschichten 62, 64 besteht. Auf diese Weise ist zwischen den Barriereschichten 62, 64 analog zur Fig. 3 ein Permeationspfad 48 gebildet.

### Bezugszeichen

- 2: Flüssigkeitsbehälter
- 4: erste Halbschale
- 6: Halbschale
- 8: Vorratsvolumen
- 10: Flüssigkeit
- 12: erste Trägerschicht
- 14: erste Barriereschicht
- 16: zweite Trägerschicht
- 18: zweite Barriereschicht
- 20: Seite
- 22: Seite
- 24: Verbindungsbereich
- 26: Laserschweißeinrichtung
- 28: Steg/Schweißkragen
- 30: Steg/Schweißkragen
- 32: Seite
- 34: Kunststoff/Sockel
- 36: Schwalltopf
- 38: Seite
- 40: Kunststoff
- 42: Flüssigkeitsbehälter
- 44: Verbindungsbereich
- 46: erstarrte Schmelze
- 48: Permeationspfad
- 50: Heizspiegel
- 52: Vorsprung
- 54: Vorsprung
- 56: Dichtelement
- 58: Stirnseite
- 60: Flüssigkeitsbehälter
- 62: erste Barriereschicht
- 64: zweite Barriereschicht
- 66: Flüssigkeitsbehälter
- 68: Vorsprung
- 70: Vorsprung
- l: Länge
- b: Breite
- U: Umgebung

## Patentansprüche

1. Flüssigkeitsbehälter für ein Kraftfahrzeug,
- mit einer ersten Halbschale (4) und
- mit einer zweiten Halbschale (6),
- wobei die Halbschalen (4, 6) ein Vorratsvolumen (8) zur Aufnahme von Flüssigkeit (10) begrenzen,
- wobei die erste Halbschale (4) eine erste Trägerschicht (12) und eine erste Barriereschicht (14, 62) hat,
- wobei die zweite Halbschale (6) eine zweite Trägerschicht (16) und eine zweite Barriereschicht (18, 64) hat,
- wobei die erste Barriereschicht (14, 62) auf einer innenliegenden, dem Vorratsvolumen (8) zugewandten Seite (20) der ersten Trägerschicht (12) angeordnet ist,
- wobei die zweite Barriereschicht (18, 64) auf einer innenliegenden, dem Vorratsvolumen (8) zugewandten Seite der zweiten Trägerschicht (16) angeordnet ist, und
- wobei die Halbschalen (4, 6) in einem Verbindungsbereich (44) stoffschlüssig miteinander verbunden sind, wobei die erste Trägerschicht (12) in dem Verbindungsbereich (44) stoffschlüssig mit der zweiten Trägerschicht (16) verbunden ist,
**dadurch gekennzeichnet,**
- **dass** die erste Barriereschicht (14, 62) und die zweite Barriereschicht (18, 64) in dem Verbindungsbereich (44) zueinander beabstandet sind, wobei kein Kontakt zwischen der ersten Barriereschicht (14, 62) und der zweiten Barriereschicht (18, 64) besteht und
- wobei erstarrte Schmelze (46) eines Materials der ersten Trägerschicht (12) und/oder eines Materials der zweiten Trägerschicht (16) zwischen den Barriereschichten (14, 18, 62, 64) angeordnet ist.

2. Flüssigkeitsbehälter nach Anspruch 1,
**dadurch gekennzeichnet, dass**
- die Barriereschichten (14, 18, 62, 64) in dem Verbindungsbereich vollständig von den Trägerschichten (12, 16) umschlossen und durch die Trägerschichten (12, 16) gegenüber einer Umgebung U abgegrenzt sind.

3. Flüssigkeitsbehälter nach Anspruch 1 oder Anspruch 2,
**dadurch gekennzeichnet,**
- **dass** in dem Verbindungsbereich (44) zwischen den zueinander beabstandeten Barriereschichten ein Permeationspfad (48) gebildet ist,
- **dass** in einem Querschnitt betrachtet eine Länge (l) des Permeationspfads größer oder gleich dem Zweifachen der Breite (b) des Permeationspfads ist,
- wobei die Breite (b) des Permeationspfads dem Abstand der Barriereschichten (14, 18, 62, 64) in dem Verbindungsbereich (44) entspricht.

4. Flüssigkeitsbehälter nach einem der Ansprüche 1 bis 3,
**dadurch gekennzeichnet,**
- **dass** wenigstens eine der Halbschalen (4, 6) in dem Verbindungsbereich (24, 44) einen Steg (28, 30) hat,
- wobei die stoffschlüssige Verbindung entlang des Stegs (28, 30) gebildet ist.

5. Flüssigkeitsbehälter nach einem der vorhergehenden Ansprüche,
**dadurch gekennzeichnet,**
- **dass** wenigstens eine der Barriereschichten (14, 18) eine einlagige Folie (14, 18) ist, die in einem Spritzgussverfahren stoffschlüssig mit der zugeordneten Trägerschicht (12, 16) verbunden worden ist,
und/oder
- **dass** wenigstens eine der Barriereschichten (62, 64) eine mehrlagige Folie (62, 64) ist, die in einem Spritzgussverfahren stoffschlüssig mit der zugeordneten Trägerschicht (12, 16) verbunden worden ist.

6. Flüssigkeitsbehälter nach einem der vorhergehenden Ansprüche,
**dadurch gekennzeichnet,**
- **dass** auf einer dem Vorratsvolumen (8) zugewandten Seite (32, 38) wenigstens einer der Barriereschichten (14, 18, 62, 64) lokal ein Kunststoff (34, 40) angespritzt ist, der zur Anbindung von Formelementen, Anschlussteilen oder Funktionseinheiten dient.

7. Verfahren zum Herstellen eines Flüssigkeitsbehälters, mit den Verfahrensschritten:
- Spritzgießen einer ersten Halbschale (4), wobei die erste Halbschale (4) eine erste Trägerschicht (12) und eine erste Barriereschicht (14, 62) hat,
- Spritzgießen einer zweiten Halbschale (6), wobei die zweite Halbschale (6) eine zweite Trägerschicht (16) und eine zweite Barriereschicht (18, 64) hat,
- Verbinden der Halbschalen (4, 6), derart, dass die Halbschalen (4, 6) ein Vorratsvolumen (8) zur Aufnahme von Flüssigkeit (10) begrenzen, wobei die erste Barriereschicht (14, 62) auf einer innenliegenden, dem Vorratsvolumen zugewandten Seite (20) der ersten Trägerschicht (12) angeordnet ist, wobei die zweite Barriereschicht (18, 64) auf einer innenliegenden, dem Vorratsvolumen (8) zugewandten Seite (22) der zweiten Trägerschicht (16) angeordnet ist,
wobei die Halbschalen (4, 6) stoffschlüssig miteinander verbunden werden, wobei die erste Trägerschicht (12) in dem Verbindungsbereich (44) stoffschlüssig mit der zweiten Trägerschicht (16) verbunden werden, wobei die erste Barriereschicht (14, 62) und die zweite Barriereschicht (18, 64) in dem Verbindungsbereich (44) zueinander beabstandet sind, wobei kein Kontakt zwischen der ersten Barriereschicht (14, 62) und der zweiten Barriereschicht (18, 64) besteht und wobei Schmelze (46) eines Materials der ersten Trägerschicht (12) und/oder eines Materials der zweiten Trägerschicht (16) zwischen den Barriereschichten (14, 18, 62, 64) erstarrt.

8. Verfahren nach Anspruch 7,
- wobei das Verbinden der Halbschalen (4, 6) durch Heizspiegelschweißen erfolgt, mit den Verfahrensschritten:
- Erhitzen und Plastifizieren wenigstens eines an einem Steg (28, 30) einer Trägerschicht (12, 16) gebildeten Vorsprungs (52, 54, 68, 70) mit einem Heizspiegel (50)
- Aneinanderdrücken der Halbschalen (4, 6) wobei plastifiziertes Material des Vorsprungs (52, 54, 68, 70) zwischen die Barriereschichten (14, 18, 62, 64) gedrückt wird.

9. Verfahren nach Anspruch 8,
- wobei während des Aneinanderdrückens der Halbschalen (4, 6) ein Dichtelement (56) an eine Stirnseite (58) des Stegs (28, 30) angelegt wird.

10. Verfahren nach Anspruch 8 oder Anspruch 9,
- wobei jede der Halbschalen (4, 6) einen umlaufenden Steg (28, 30) mit wenigstens einem Vorsprung (52, 54, 68, 70) aufweist, wobei einander zugewandte Vorsprünge (52, 54, 68, 70) beider Halbschalen (4, 6) vor dem Aneinanderdrücken der Halbschalen (4, 6) mithilfe des Heizspiegels (50) plastifiziert werden.

## Claims

1. Liquid container for a motor vehicle,
- having a first half-shell (4) and
- having a second half-shell (6),
- wherein the half-shells (4, 6) delimit a storage volume (8) for accommodating liquid (10),
- wherein the first half-shell (4) has a first support layer (12) and a first barrier layer (14, 62),
- wherein the second half-shell (6) has a second support layer (16) and a second barrier layer (18, 64),
- wherein the first barrier layer (14, 62) is situated on an inner side (20) of the first support layer (12) facing the storage volume (8),
- wherein the second barrier layer (18, 64) is situated on an inner side of the second support layer (16) facing the storage volume (8).
- the half-shells (4, 6) in a connecting area (44) are integrally joined together, the first support layer (12) in the connecting area (44) being integrally joined to the second support layer (16),
**characterized in that**
- the first barrier layer (14, 62) and the second barrier layer (18, 64) in the connecting area (44) are spaced apart from one another, with no contact between the first barrier layer (14, 62) and the second barrier layer (18, 64) and
- wherein solidified melt (46) of a material of the first support layer (12) and/or of a material of the second support layer (16) is situated between the barrier layers (14, 18, 62, 64).

2. Liquid container according to Claim 1, **characterized in that**
- the barrier layers (14, 18, 62, 64) in the connecting area are completely enclosed by the support layers (12, 16) and isolated from the surroundings U by the support layers (12, 16) .

3. Liquid container according to Claim 1 or Claim 2, **characterized in that**
- a permeation path (48) is formed in the connecting area (44) between the spaced-apart barrier layers,
- a length (1) of the permeation path, viewed in a cross section, is greater than or equal to twice the width (b) of the permeation path,
- wherein the width (b) of the permeation path corresponds to the distance between the barrier layers (14, 18, 62, 64) in the connecting area (44).

4. Liquid container according to one of Claims 1 to 3, **characterized in that**
- at least one of the half-shells (4, 6) in the connecting area (24, 44) has a nose-piece (28, 30),
- wherein the integral bond is formed along the nose-piece (28, 30).

5. Liquid container according to one of the preceding Claims, **characterized in that**
- at least one of the barrier layers (14, 18) is a one-ply film (14, 18) that has been integrally joined to the associated support layer (12, 16) in an injection molding process,
and/or
- at least one of the barrier layers (62, 64) is a multi-ply film (62, 64) that has been integrally joined to the associated support layer (12, 16) in an injection molding process.

6. Liquid container according to one of the preceding Claims, **characterized in that**
- a plastic (34, 40) that is used for attaching molded elements, connecting parts, or functional units is locally molded onto a side (32, 38) of at least one of the barrier layers (14, 18, 62, 64) facing the storage volume (8).

7. A method for manufacturing a liquid container, having the method steps:
- injection molding of a first half-shell (4), the first half-shell (4) having a first support layer (12) and a first barrier layer (14, 62),
- injection molding of a second half-shell (6), the second half-shell (6) having a second support layer (16) and a second barrier layer (18, 64),
- joining the half-shells (4, 6) in such a way that the half-shells (4, 6) delimit a storage volume (8) for accommodating liquid (10), the first barrier layer (14, 62) being situated on an inner side (20) of the first support layer (12) facing the storage volume, and the second barrier layer (18, 64) being situated on an inner side (22) of the second support layer (16) facing the storage volume (8),
the half-shells (4, 6) in a connecting area (44) being integrally joined together, the first support layer (12) in the connecting area (44) being integrally joined to the second support layer (16), the first barrier layer (14, 62) and the second barrier layer (18, 64) in the connecting area (44) being spaced apart from one another, with no contact between the first barrier layer (14, 62) and the second barrier layer (18, 64) and wherein melt (46) of a material of the first support layer (12) and/or of a material of the second support layer (16) is solidified between the barrier layers (14, 18, 62, 64).

8. Method according to Claim 7,
- wherein the half-shells a(4, 6) are joined by hot plate welding, with the method steps:
- heating and plasticizing at least one protrusion (52, 54, 68, 70) that is formed on a nose-piece (28, 30) of a support layer (12, 16), using a hot plate (50)
- pressing the half-shells together (4, 6), with plasticized material of the protrusion (52, 54, 68, 70) being pressed between the barrier layers (14, 18, 62, 64).

9. Method according to Claim 8,
- wherein during the pressing together of the half-shells (4, 6), a sealing element (56) is placed against an end-face side (58) of the nose-piece (28, 30).

10. The method according to Claim 8 or Claim 9,
- wherein each of the half-shells (4, 6) has a circumferential nose-piece (28, 30) with at least one protrusion (52, 54, 68, 70), wherein protrusions (52, 54, 68, 70) of the two half-shells (4, 6) mutually facing each other are plasticized by means of the hot plate (50) before the half-shells (4, 6) are pressed together.

## Revendications

1. Réservoir de liquide pour un véhicule automobile,
- comportant une première demi-coque (4) et
- comportant une seconde demi-coque (6),
- dans lequel les demi-coques (4, 6) délimitent un volume de réserve (8) pour la réception de liquide (10),
- dans lequel la première demi-coque (4) comporte une première couche support (12) et une première couche barrière (14, 62),
- dans lequel la seconde demi-coque (6) comporte une seconde couche support (16) et une seconde couche barrière (18, 64),
- dans lequel la première couche barrière (14, 62) est disposée sur une face (20) intérieure de la première couche support (12) faisant face au volume de réserve (8),
- dans lequel la seconde couche barrière (18, 64) est disposée sur une face intérieure de la seconde couche support (16) faisant face au volume de réserve (8), et
- dans lequel les demi-coques (4, 6) sont reliées l'une à l'autre par liaison de complémentarité de matière dans une zone de liaison (44), dans leque la première couche support (12) est reliée à la seconde couche support (16) par liaison de complémentarité de matière dans la zone de liaison (44),
**caractérisé en ce**
- **que** la première couche barrière (14, 62) et la seconde couche barrière (18, 64) sont espacées l'une de l'autre dans la zone de liaison (44), dans lequel aucun contact n'existe entre la première couche barrière (14, 62) et la seconde couche barrière (18, 64) et
- dans lequel une masse fondue (46) solidifiée d'une matière de la première couche support (12) et/ou d'une matière de la seconde couche support (16) est disposée entre les couches barrières (14, 18, 62, 64).

2. Réservoir de liquide selon la revendication 1,
**caractérisé en ce que**
- les couches barrières (14, 18, 62, 64) sont complètement entourées par les couches supports (12, 16) dans la zone de liaison et sont délimitées par rapport à un environnement U par les couches supports (12, 16).

3. Réservoir de liquide selon la revendication 1 ou la revendication 2,
**caractérisé en ce**
- **qu'**un chemin de perméation (48) est formé dans la zone de liaison (44) entre les couches barrières espacées l'une de l'autre,
- **que**, vue en coupe transversale, une longueur (1) du chemin de perméation est supérieure ou égale au double de la largeur (b) du chemin de perméation,
- dans lequel la largeur (b) du chemin de perméation correspond à la distance entre les couches barrières (14, 18, 62, 64) dans la zone de liaison (44).

4. Réservoir de liquide selon l'une quelconque des revendications 1 à 3,
**caractérisé en ce**
- **qu'**au moins l'une des demi-coques (4, 6) comporte une nervure (28, 30) dans la zone de liaison (24, 44),
- dans lequel la liaison par liaison de complémentarité de matière est formée le long de la nervure (28, 30).

5. Réservoir de liquide selon l'une quelconque des revendications précédentes, **caractérisé en ce**
- **que** l'au moins une des couches barrières (14, 18) est un film (14, 18) monocouche, lequel a été relié par liaison de complémentarité de matière à la couche support (12, 16) associée dans un procédé de moulage par injection, et/ou
- **que** l'au moins une des couches barrières (62, 64) est un film (62, 64) multicouche, lequel a été relié par liaison de complémentarité de matière à la couche support (12, 16) associée dans un procédé de moulage par injection.

6. Réservoir de liquide selon l'une quelconque des revendications précédentes, **caractérisé en ce**
- **qu'**une matière plastique (34, 40) est injectée localement sur une face (32, 38) de l'au moins une des couches barrières (14, 18, 62, 64) faisant face au volume de réserve (8), laquelle matière plastique sert à relier des éléments moulés, des pièces de raccordement ou des unités fonctionnelles.

7. Procédé de fabrication d'un réservoir de liquide, comportant les étapes suivantes :
- le moulage par injection d'une première demi-coque (4), dans lequel la première demi-coque (4) comporte une première couche support (12) et une première couche barrière (14, 62),
- le moulage par injection d'une seconde demi-coque (6), dans lequel la seconde demi-coque (6) comporte une seconde couche support (16) et une seconde couche barrière (18, 64),
- la liaison des demi-coques (4, 6) de telle sorte que les demi-coques (4, 6) délimitent un volume de réserve (8) pour la réception de liquide (10), dans lequel la première couche barrière (14, 62) est disposée sur une face (20) intérieure de la première couche support (12) faisant face au volume de réserve, dans lequel la seconde couche barrière (18, 64) est disposée sur une face (22) intérieure de la seconde couche support (16) faisant face au volume de réserve (8), dans lequel les demi-coques (4, 6) sont reliées l'une à l'autre par liaison de
complémentarité de matière, dans lequel la première couche support (12) est reliée à la seconde couche de support (16) par liaison de complémentarité de matière dans la zone de liaison (44), dans lequel la première couche barrière (14, 62) et la seconde couche barrière (18, 64) sont espacées l'une de l'autre dans la zone de liaison (44), dans lequel aucun contact n'existe entre la première couche barrière (14, 62) et la seconde couche barrière (18, 64) et dans lequel une masse fondue (46) d'une matière de la première couche support (12) et/ou d'une matière de la seconde couche support (16) se solidifie entre les couches barrières (14, 18, 62, 64).

8. Procédé selon la revendication 7,
- dans lequel la liaison des demi-coques (4, 6) est effectuée par soudage par miroir chauffant, comportant les étapes suivantes :
- le chauffage et la plastification d'au moins une saillie (52, 54, 68, 70) formée au niveau d'une nervure (28, 30) d'une couche support (12, 16) à l'aide d'un miroir chauffant (50)
- le pressage des demi-coques (4, 6) l'une contre l'autre, dans lequel la matière plastifiée de la saillie (52, 54, 68, 70) est pressée entre les couches barrières (14, 18, 62, 64).

9. Procédé selon la revendication 8,
- dans lequel un élément d'étanchéité (56) est appliqué sur une face frontale (58) de la nervure (28, 30) lors du pressage des demi-coques (4, 6) l'une contre l'autre.

10. Procédé selon la revendication 8 ou la revendication 9,
- dans lequel chacune des demi-coques (4, 6) comprend une nervure (28, 30) périphérique comportant au moins une saillie (52, 54, 68, 70), dans lequel les saillies (52, 54, 68, 70) des deux demi-coques (4, 6) se faisant face sont plastifiées à l'aide du miroir chauffant (50) avant que le pressage des demi-coques (4, 6) l'une contre l'autre.
